# EUROPÄISCHE PATENTSCHRIFT

(11) **EP 3 838 813 B1**
(45) Veröffentlichungstag und Bekanntmachung des Hinweises auf die Patenterteilung: **20.03.2024**
(21) Anmeldenummer: 20214716.1
(22) Anmeldetag: 16.12.2020
(51) Int. Cl.: B65G 47/84, B67C 7/00, B65G 29/00

(54) **BEHÄLTERBEHANDLUNGSVORRICHTUNG MIT EINER VORRICHTUNG ZUM ZUFÜHREN ODER ZUM ABFÜHREN EINES BEHÄLTERS**
CONTAINER HANDLING APPARATUS WITH A DEVICE FOR FEEDING OR DISCHARGING A CONTAINER
DISPOSITIF DE TRAITEMENT DES RÉCIPIENTS AVEC UN DISPOSITIF D'ALIMENTATION OU D'ÉVACUATION D'UN RÉCIPIENT

(30) Priorität: 16.12.2019 DE 102019134519
(43) Veröffentlichungstag der Anmeldung: 23.06.2021
(73) Patentinhaber: KRONES AG, 93073 Neutraubling (DE)
(72) Erfinder: Leidel, Marco, 93073 Neutraubling (DE); Zeitler, Felix, 93073 Neutraubling (DE)
(74) Vertreter: Nordmeyer, Philipp Werner

(56) Entgegenhaltungen:
- EP-A1- 0 382 161
- DE-A1-102005 042 275
- US-A- 1 576 429
- US-A- 3 314 519
- US-A- 4 567 919

## Beschreibung

### Technisches Gebiet

Die vorliegende Erfindung betrifft eine Behälterbehandlungsvorrichtung mit einer Vorrichtung zum Zuführen eines Behälters und ferner eine Behälterbehandlungsvorrichtung mit einer Vorrichtung zum Abführen eines Behälters, wobei die Behälterbehandlungsvorrichtung bevorzugt zum Verschließen eines mit einem Füllgut befüllten Behälters und/oder zum Befüllen eines Behälters mit einem Füllgut in einer Getränkeabfüllanlage eingerichtet ist.

### Stand der Technik

Im Bereich der Getränkeabfüllanlage ist bekannt, Behälter mittels Transportvorrichtungen zum Transportieren der Behälter durch die Getränkeabfüllanlage zu transportieren, um die Behälter so von einer Behandlungsstation zu einer nächsten zu bewegen. Hierbei sind verschiedene Arten bekannt, die Bewegung auf den Behälter zu übertragen.

Unter anderem ist es bekannt, Transportvorrichtungen in Rundläuferbauweise auszubilden, bei welchen die zu transportierenden Behälter entlang eines Teilkreises um eine Drehachse herum gefördert werden. Aufgrund der bei Drehbewegungen auftretenden Fliehkräfte sind der Transportgeschwindigkeit bei Vorrichtungen in Rundläuferbauweise zumindest für bereits mit einem flüssigen Füllgut befüllte, aber noch unverschlossene Behälter Grenzen gesetzt. Bei zu hoch eingestellter Transportgeschwindigkeit würde das in den unverschlossenen Behältern befindliche flüssige Füllgut fliehkraftbedingt überschwappen.

Weiterhin erfährt der Behälter bei der Übergabe eines Behälters von einer Transportrichtung in Rundläuferbauweise auf eine weitere Transportrichtung in Rundläuferbauweise am Übergabepunkt von der in Transportrichtung gesehen vorgelagerten Transportrichtung an die in Transportrichtung gesehen nachgelagerte Transportvorrichtung eine Umkehr der auf ihn wirkenden Zentripetalkraft.

Ist in den Behälter bereits ein flüssiges Füllgut eingefüllt, so kann es aufgrund des plötzlichen Wechsels der Wirkrichtung der Zentripetalkraft und somit auch des Wechsels der Wirkrichtung der der Zentrifugalkraft zu einem Rütteln des Behälters und/oder zu einem Überschwappen von flüssigen Füllgut aus dem Behälter heraus kommen.

Zum Führen der Behälter kommen im Wesentlichen zwei unterschiedliche Arten der Behälterführung zum Einsatz. Insbesondere bei Behältern mit geringem Gewicht, wie etwa Kunststoffflaschen, ist es bekannt, diese an einem im Halsbereich des Behälters angeordneten Tragring abzustützen. Hierbei spricht man von einem sogenannten "Neck-Handling". Die Transportrichtung weist dazu in der Regel eine Vielzahl von Greifern oder Klammern auf, mit welchen die Transportrichtung die Behälter im Halsbereich unterhalb des Tragrings greift, wobei sich der Tragring an dem Greifer oder der Klammer abstützt.

Ferner ist es bekannt, die Behälter an ihrem Behälterboden abzustützen. Hier spricht man von einer Bodentransportvorrichtung oder einem "Base-Handling". Letztere kommt insbesondere bei schwereren Behältern, wie etwa Glasflaschen, sowie bei Behältern, welche eine Geometrie aufweisen, derart sodass das Anbringen eines Tragrings nur schwer möglich ist, wie beispielsweise Getränkekartons, zum Einsatz.

Bei einer Bodentransportvorrichtung ist neben der Änderung der Zentripetalkraft bei einer Übergabe an ein Transportkarussell bzw. einer Übernahme von einem Transportkarussell zusätzlich das Überführen von einer Transportvorrichtung an die darauf folgende Transportvorrichtung eine Herausforderung. Bei einem tangentialen Zuführen bzw. Abführen eines Behälters von einer Transportvorrichtung an eine nachfolgende bezieht sich das tangentiale Zuführen bzw. Abführen auf den Mittelpunkt des Behälters. Da jeder Behälter eine Erstreckung radial zu dessen Mittelachse aufweist, trifft der Behälterboden bereits vor dem eigentlichen Übergabepunkt bzw. Übernahmepunkt auf die folgende Transportvorrichtung. In diesem Auftreffpunkt ist die Bewegungsrichtung der vorgelagerten Transportvorrichtung und jene der nachgelagerten Transportvorrichtungen unterschiedlich, sodass der Behälter einen Stoß erfährt. Infolgedessen kommt es zwischen dem Auftreffpunkt und dem Übergabepunkt zu einem vermehrten Rütteln des bodengeführten Behälters, was zu einem Ausschwappen von in einem unverschlossenen Behälter eingefügten Füllgut führen kann. Zudem kann es zu einem Kippen und/oder Verklemmen des Behälters kommen.

Um die maximal mögliche Transportgeschwindigkeit zu erhöhen, ist es bekannt, die dem Behandlungskarussell vor- beziehungsweise nachgelagerte Transportvorrichtung als lineare Transportvorrichtung auszubilden. Hier wird ein von einer Behandlungsvorrichtung tangential ausgeschleuster Behälter linear in der tangentialen Richtung weitertransportiert. Alternativ erfolgt die Zuführung linear in Richtung der tangentialen Zuführung.

Die EP 0 382 161 A1 beschreibt eine Verschließmaschine für Flaschen. Die US 4,567,919 A beschreibt eine Vorrichtung und ein Verfahren zum Befüllen von Behältern. Die US 3,314,519 A beschreibt eine Behälterbehandlungsvorrichtung mit den Merkmalen des Oberbegriffs der Ansprüche 1 und 7.

### Darstellung der Erfindung

Ausgehend von dem bekannten Stand der Technik ist es eine Aufgabe der vorliegenden Erfindung, eine verbesserte Übergabe beziehungsweise Übernahme eines Behälters an eine beziehungsweise von einer Behälterbehandlungsvorrichtung, bevorzugt an eine Behälterverschließvorrichtung oder von einer Füllvorrichtung in einer Getränkeabfüllanlage zu ermöglichen.

Die Aufgabe wird durch eine Behälterbehandlungsvorrichtung mit den Merkmalen des Anspruchs 1 sowie des Anspruchs 7 gelöst. Vorteilhafte Weiterbildungen ergeben sich aus den Unteransprüchen, der Beschreibung und den Figuren.

Entsprechend wird eine Behälterbehandlungsvorrichtung zum Behandeln eines Behälters, bevorzugt zum Verschließen eines mit einem Füllgut befüllten Behälters und/oder zum Befüllen eines Behälters mit einem Füllgut in einer Getränkeabfüllanlage, vorgeschlagen, umfassend ein Transportkarussell zum Transportieren von Behältern auf einem Teilkreis und eine Behandlungseinheit zum Behandeln der durch das Transportkarussell transportieren Behälter.

Die Behälterbehandlungsvorrichtung weist ferner eine Vorrichtung zum Zuführen eines Behälters auf, umfassend eine Bodentransportvorrichtung zum linearen Transportieren des Behälters an dessen Behälterboden in einer Transportrichtung und eine seitliche Führung zum tangentialen Zuführen des durch die Bodentransportvorrichtung transportierten Behälters in einem Übergabepunkt an den Teilkreis der Behälterbehandlungsvorrichtung. Die Vorrichtung zum Zuführen eines Behälters ist erfindungsgemäß dadurch ausgebildet, dass die Bodentransportvorrichtung in Transportrichtung gesehen dem Übergabepunkt der seitlichen Führung vorgelagert einen sich bis zum Übergabepunkt erstreckenden Übergabeabschnitt aufweist, in welchem die Bodentransportvorrichtung im Wesentlichen parallel zum Teilkreis verläuft.

Dadurch, dass die Bodentransportvorrichtung in Transportrichtung gesehen dem Übergabepunkt der seitlichen Führung vorgelagert einen sich bis zum Übergabepunkt erstreckenden Übergabeabschnitt aufweist, in welchem die Bodentransportvorrichtung im Wesentlichen parallel

zum Teilkreis verläuft, kann erreicht werden, dass beim Überführen des Behälters von der Bodentransportvorrichtung an ein in Transportrichtung des Behälters gesehen abwärts angeordnetes Bodentransportkarussell ein durch das Überführen auf den Behälter induzierter Stoß vermindert oder gar gänzlich vermieden werden kann.

Im Übergabeabschnitt sind die Bewegungsrichtung der Bodentransportvorrichtung und jene des Bodentransportkarussells ähnlich oder gar im Wesentlichen gleich orientiert. Wird der Behälter in diesem Übergabeabschnitt nun sukzessive via der seitlichen Führung von der Bodentransportvorrichtung auf das Bodentransportkarussell überführt, so erfährt der Behälter an seinem Behälterboden aufgrund der ähnlichen oder gar gleichen Orientierung der Bewegungsrichtungen keine signifikanten Stöße. Aufgrund des Fehlens bzw. der lediglich geringen auf den Behälterboden induzierten Stöße ist ein darauf zurückzuführendes Rütteln des Behälters während der Übergabe im Vergleich zu herkömmlichen Vorrichtungen stark reduziert oder gar gänzlich egalisiert.

Der Übergabeabschnitt und der Teilkreis sind folglich im Wesentlichen konzentrisch zueinander angeordnet. Ein durch den Übergabeabschnitt sich ergebender Mittelpunkt fällt mithin im Wesentlichen mit dem Mittelpunkt des Teilkreises zusammen.

Damit kann die Prozesssicherheit verbessert werden, da die Gefahr eines aufgrund des Überführens des Behälters verursachten Kippens oder Verklemmens des Behälters stark reduziert oder gar gänzlich vermieden wird.

Das oben beschriebene verminderte Rütteln des Behälters während des Überführens des Behälters erlaubt zudem, im Vergleich zu herkömmlichen Vorrichtungen eine höhere maximale Transportgeschwindigkeit, bei welcher es im Wesentlichen nicht zu einem Überschwappen von flüssigen Füllgut aus dem unverschlossenen Behälter kommt. Demgemäß lässt sich auch ein maximal möglicher Durchsatz, bei welchem ein sicherer Betrieb ohne Überschwappen möglich ist, im Vergleich zu herkömmlichen Vorrichtungen erhöhen.

Die vorgeschriebene Behälterzuführvorrichtung eignet sich insbesondere zum Zuführen von mit einem Füllgut befüllten Behältern zu einer Verschließvorrichtung zum Verschließen der befüllten Behälter.

Gemäß einer bevorzugten Ausführungsform weist die Bodentransportvorrichtung in Transportrichtung gesehen dem Übergabepunkt vorgelagert zunächst aus einer linearen Zuführrichtung eine Auslenkung in Richtung des Mittelpunktes des Teilkreises auf, und weist die Bodentransportvorrichtung anschließend einen Krümmungswechsel auf, derart, dass die Bodentransportvorrichtung an einem Auftreffpunkt tangential zum Teilkreis orientiert ist, wobei bevorzugt die Bodentransportvorrichtung im Auftreffpunkt einen weiteren Krümmungswechsel aufweist. Mit anderen Worten ist die Bodentransportvorrichtung in Transportrichtung gesehen dem Übergabepunkt vorgelagert S-Schlag-förmig ausgebildet. Dadurch lässt sich erzielen, dass die Bodentransportvorrichtung und ein Bodentransportkarussell, welches zu behandelnde Behälter entlang des Teilkreises zumindest entlang eines vorgegebenen Winkelabschnitts transportiert, im Auftreffpunkt im Wesentlichen parallele Bewegungsrichtungen aufweisen. Dadurch kann ein besonders schonendes Überführen des Behälters von der Bodentransportvorrichtung auf das Bodentransportkarussell erzielt werden.

Unter "tangential orientiert" wird vorliegend verstanden, dass die Orientierung in radialer Richtung bezüglich des Teilkreises gesehen parallel zu einer Tangente des Teilkreises, welche im Schnittpunkt der radialen Richtung und des Teilkreises am Teilkreis anliegt, ausgerichtet ist. Bevorzugt ist die Bodentransportvorrichtung tangential zu dem Teilkreis.

Es hat sich als vorteilhaft herausgestellt, wenn die Bodentransportvorrichtung ein im Wesentlichen horizontal angeordnetes Förderband und/oder eine im Wesentlichen horizontal angeordnete Förderkette aufweist. Insbesondere im Falle der Förderkette, jedoch auch im Falle des Förderbandes kann diese bzw. dieses derart ausgebildet sein, dass die Auslenkung der Bodentransportvorrichtung aus der linearen Bewegungsrichtung kein Abknicken des Förderbandes bzw. der Förderkette zur Folge hat. Beispielsweise kann das Förderband ein hinreichend deformierbares Material aufweisen, oder die einzelnen Segmente der Förderkette können in einem vorgegebenen Winkelbereich in einer horizontalen Ebene gesehen relativ zueinander verschwenkbar sein. Hierdurch kann die Bodentransportvorrichtung im Übergabebereich besonders nahe an das Bodentransportkarussell angeordnet werden, sodass ein sich zwischen der Bodentransportvorrichtung und dem Bodentransportkarussell im Übergabebereich einstellender Spalt möglichst gering gehalten werden kann.

Gemäß einer weiteren vorteilhaften Ausführungsform weist die seitliche Führung eine Teilungszuführeinheit, bevorzugt eine Führungsschnecke, zum teilgenauen Zuführen von Behältern an den Teilkreis auf. Hierdurch kann erzielt werden, dass die Behälter von der Vorrichtung an die Behälterbehandlungsvorrichtung teilgenau übergeben werden. Mit anderen Worten kann so erzielt werden, dass die Taktung, mit welcher die Vorrichtung die Behälter an die Behälterbehandlungsvorrichtung übergibt, der Taktung der Behälterbehandlungsvorrichtung entspricht. Mithin wird durch die Teilungszuführeinheit ermöglicht, dass die zu überführenden Behälter auf die Teilung der Behälterbehandlungsvorrichtung bzw. deren Bodentransportkarussells gebracht werden, bevor sie an die Behälterbehandlungsvorrichtung bzw. das Bodentransportkarussell übergeben werden. Entsprechend können die Behälter bei der Übergabe in die an der Behälterbehandlungsvorrichtung vorgesehenen Position vorpositioniert und dadurch im Wesentlichen stoßfrei übergeben werden.

Die Teilungszuführeinheit weist bevorzugt eine Vorschubgeschwindigkeit zum Bewegen einer Behälteraufnahme auf, in welcher ein zu führender Behälter durch die Teilungszuführeinheit in Bewegungsrichtung geführt ist, welche sich von einer Vorschubgeschwindigkeit in Bewegungsrichtung der Bodentransportvorrichtung unterscheidet, bevorzugt geringfügig unterscheidet. Im Falle der Ausbildung der Teilungszuführeinheit als Führungsschnecke weist die Führungsschnecke eine Vielzahl von Behälteraufnahmen auf, welche jeweils durch den Gewindegang zwischen zwei benachbarten, in Richtung des zu transportierenden Behälters weisenden Abschnitten der Gewindeflanke ausgebildet sind. Durch eine Rotation der Förderschnecke um ihre Längsachse erfahren die Behälteraufnahmen ein Verschieben in Richtung der Längsachse, mithin in Bewegungsrichtung der Behälter. Durch die Vorgabe der Rotationsgeschwindigkeit der Förderschnecke kann entsprechend der Form der Förderschnecke die Vorschubgeschwindigkeit der Behälteraufnahmen vorgegeben werden.

Wenn die Vorschubgeschwindigkeit der Teilungszuführeinheit größer vorgegeben ist als die Vorschubgeschwindigkeit der Bodentransportvorrichtung, mithin die Teilungszuführeinheit (geringfügig) schneller transportiert als die Bodentransportvorrichtung, kann ein Anliegen der Behälter an einer hinteren Flanke der Behälteraufnahmen beziehungsweise Taschen erreicht werden. Alternativ kann die Vorschubgeschwindigkeit der Teilungszuführeinheit kleiner vorgegeben sein als die Vorschubgeschwindigkeit der Bodentransportvorrichtung, so dass die Teilungszuführeinheit geringfügig langsamer transportiert als die Bodentransportvorrichtung. Dadurch kann ein Anliegen der Behälter an einer vorderen Flanke der jeweiligen Behälteraufnahmen beziehungsweise Taschen erreicht werden.

Durch das oben beschriebene Anliegen des transportierten Behälters an einer der beiden Flanken der Behälteraufnahme kann sich das Ruckeln bei der Übergabe zusätzlich verringern, da die Behälter schon fest an die Teilungszuführeinheit angelegt sind und so die Auswirkungen des sukzessiven Außer-Eingriff-Bringens der Bodentransportvorrichtung im Übergabebereich lediglich einen verminderten Einfluss auf die Bewegung des Behälters haben. Hierbei hat es sich als besonders vorteilhaft herausgestellt, die Vorschubgeschwindigkeit der Teilungszuführeinheit größer vorzugeben als die Vorschubgeschwindigkeit der Bodentransportvorrichtung, so dass die Behälter an der hinteren Flanke der Behälteraufnahme anliegen.

Der Unterschied zwischen der Vorschubgeschwindigkeit der Teilungszuführeinheit und der Vorschubgeschwindigkeit der Bodentransportvorrichtung ist bevorzugt gleich oder kleiner 5% der Vorschubgeschwindigkeit der Bodentransportvorrichtung, besonders bevorzugt gleich oder kleiner 2 %, besonders bevorzugt gleich oder kleiner 1 %, besonders bevorzugt gleich oder kleiner 0,5% und ganz besonders bevorzugt gleich oder kleiner 0,01 %.

Vorzugsweise weist die seitliche Führung bezogen auf die Transportrichtung und bezüglich des Teilkreises einen auf einer radial äußeren Seite angeordneten radial äußeren Führungsteil auf, und/oder weist die seitliche Führung bezogen auf die Transportrichtung und bezüglich des Teilkreises einen auf einer radial inneren Seite angeordneten radial inneren Führungsteil auf. Unter "radial äußere Seite" wird jene Seite bezogen auf die geführten Behälter verstanden, welche einen geführten Behälter an einer bezogen auf den Mittelpunkt des Teilkreises radial äußeren Seite des Behälters in Hinblick auf den Mittelpunkt des Teilkreises, mithin einer dem Mittelpunkt abgewandten Seite des Behälters, führt. Entsprechend wird die "radial innere Seite" als jene Seite verstanden, auf welcher ein geführter Behälter an dessen den Mittelpunkt zugewandten Seite geführt wird. Anders ausgedrückt ist das radial äußere Führungsteil bezogen auf eine radiale Richtung ausgehend vom Mittelpunkt des Teilkreises weiter vom Mittelpunkt entfernt als dass radial innere Führungsteil.

Das radial äußere Führungsteil und das radial innere Führungsteil sind mithin bezogen auf einen durch die seitliche Führung geführten Behälter sich gegenüberliegend angeordnet, wobei das radial äußere Führungsteil den Behälter auf einer ersten Seite führt, und das radial innere Führungsteil den Behälter auf einer der ersten Seite gegenüberliegenden zweiten Seite führt. Mit anderen Worten stellen das radial äußere Führungsteil und das radial innere Führungsteil eine beidseitige Führung quer zur Transportrichtung des Behälters bereit.

Es hat sich als vorteilhaft herausgestellt, wenn der radial äußere Führungsteil die Teilungszuführeinheit aufweist, wobei bevorzugt der radial innere Führungsteil eine Führungsschiene aufweist, welche den auf der Bodentransportvorrichtung transportierten Behälter quer zur Transportrichtung in einer Behälteraufnahme der Teilungszuführeinheit hält.

Die oben gestellte Aufgabe wird weiterhin durch eine Vorrichtung zum Abführen eines Behälters mit den Merkmalen des Anspruchs 7 gelöst. Vorteilhafte Weiterbildungen ergeben sich aus den Unteransprüchen sowie der vorliegenden Beschreibung und den Figuren.

Entsprechend umfasst die Behälterbehandlungsvorrichtung eine Vorrichtung zum Abführen eines Behälters, umfassend eine Bodentransportvorrichtung zum linearen Transportieren des Behälters an dessen Behälterboden in einer Transportrichtung und eine seitliche Führung zum tangentialen Abführen des durch die Bodentransportvorrichtung zu transportierenden Behälters in einem Übernahmepunkt von dem Teilkreis der Behälterbehandlungsvorrichtung. Die Vorrichtung zum Abführen eines Behälters, anders ausgedrückt Behälterabführvorrichtung, kennzeichnet sich dadurch, dass die Bodentransportvorrichtung in Transportrichtung gesehen dem Übernahmepunkt der seitlichen Führung nachgelagert einen sich bis zu einem Abzweigpunkt erstreckenden Übernahmeabschnitt aufweist, in welchem die Bodentransportvorrichtung im Wesentlichen parallel zum Teilkreis verläuft.

Dadurch, dass die Bodentransportvorrichtung in Transportrichtung gesehen dem Übernahmepunkt der seitlichen Führung nachgelagert einen sich bis zu einem Abzweigpunkt erstreckenden Übernahmeabschnitt aufweist, in welchem die Bodentransportvorrichtung im Wesentlichen parallel zum Teilkreis verläuft, kann erzielt werden, dass beim Überführen des Behälters von einer in Transportrichtung des Behälters gesehen stromaufwärts eines Bodentransportkarussells angeordneter Bodentransportvorrichtung an das Bodentransportkarussell ein durch das Überführen auf den Behälter induzierter Stoß vermindert oder gar gänzlich vermieden werden kann.

Im Übernahmeabschnitt sind die Bewegungsrichtung der Bodentransportvorrichtung und jene des Bodentransportkarussells ähnlich oder gar im Wesentlichen gleich orientiert. Wird der Behälter in diesem Übergabeabschnitt nun sukzessive via der seitlichen Führung von dem Bodentransportkarussell auf die Bodentransportvorrichtung überführt, so erfährt der Behälter an seinem Behälterboden aufgrund der ähnlichen oder gar gleichen Orientierung der Bewegungsrichtungen keine signifikanten Stöße. Aufgrund des Fehlens bzw. der lediglich geringen auf den Behälterboden induzierten Stöße ist ein darauf zurückzuführendes Rütteln des Behälters während der Übergabe im Vergleich zu herkömmlichen Vorrichtungen stark reduziert oder gar gänzlich egalisiert.

Hierdurch kann die Prozesssicherheit verbessert werden, da die Gefahr eines aufgrund des Überführens des Behälters verursachten Kippens oder Verklemmens des Behälters stark reduziert oder gar gänzlich vermieden wird.

Das oben beschriebene verminderte Rütteln des Behälters während des Überführens des Behälters erlaubt zudem, im Vergleich zu herkömmlichen Vorrichtungen, eine höhere maximale Transportgeschwindigkeit, bei welcher es im Wesentlichen nicht zu einem Überschwappen von flüssigen Füllgut aus dem unverschlossenen Behälter kommt. Demgemäß lässt sich auch ein maximal möglicher Durchsatz, bei welchem ein sicherer Betrieb ohne Überschwappen möglich ist, im Vergleich zu herkömmlichen Vorrichtungen erhöhen.

Die vorgeschriebene Behälterabführvorrichtung eignet sich insbesondere zum Abführen von mit einem Füllgut in einer Füllvorrichtung befüllten Behältern.

Gemäß einer bevorzugten Ausführungsform weist die Bodentransportvorrichtung in Transportrichtung gesehen dem Übernahmeabschnitt nachgelagert zunächst eine Auslenkung nach radial außen bezogen auf den Mittelpunkt des Teilkreises auf, und weist die Bodentransportvorrichtung anschließend einen Krümmungswechsel auf, derart, dass die Bodentransportvorrichtung an einem Zusammenführungspunkt parallel zur seitlichen Führung orientiert ist. Mit anderen Worten ist die Bodentransportvorrichtung in Transportrichtung gesehen dem Übernahmepunkt nachgelagert S-Schlag-förmig ausgebildet. Dadurch lässt sich erzielen, dass die Bodentransportvorrichtung und ein Bodentransportkarussell, welches zu behandelnde Behälter entlang des Teilkreises zumindest entlang eines vorgegebenen Winkelabschnitts transportiert, im Übernahmeabschnitt bis zum Abzweigpunkt, jenseits von welchem der überführte Behälter keinen Kontakt mehr mit dem Transportkarussell hat, im Wesentlichen parallele Bewegungsrichtungen aufweisen. Dadurch kann ein besonders schonendes Überführen des Behälters von dem Bodentransportkarussell an die Bodentransportvorrichtung erzielt werden.

Es hat sich als vorteilhaft herausgestellt, wenn die Bodentransportvorrichtung ein im Wesentlichen horizontal angeordnetes Förderband und/oder eine im Wesentlichen horizontal angeordnete Förderkette aufweist. Insbesondere im Falle der Förderkette, jedoch auch im Falle des Förderbandes kann diese bzw. dieses derart ausgebildet sein, dass die Auslenkung der Bodentransportvorrichtung aus der linearen Bewegungsrichtung kein Abknicken des Förderbandes bzw. der Förderkette zur Folge hat. Beispielsweise kann das Förderband ein hinreichend deformierbares Material aufweisen, oder die einzelnen Segmente der Förderkette können in einem vorgegebenen Winkelbereich in einer horizontalen Ebene gesehen relativ zueinander verschwenkbar sein. Hierdurch kann die Bodentransportvorrichtung im Übernahmebereich besonders nahe an das Bodentransportkarussell angeordnet werden, sodass ein sich zwischen der Bodentransportvorrichtung und dem Bodentransportkarussell im Übernahmebereich einstellender Spalt möglichst gering gehalten werden kann.

In einer Weiterbildung kann zumindest ein Magnet vorgesehen sein, welcher die einzelnen Kettenglieder der Förderkette im Bereich, in welchem die Förderkette aus ihrer linearen Ausrichtung ausgelenkt ist, via der magnetischen Kraft des Magneten plan gehalten werden. Bevorzugt ist der zumindest eine Magnet unterhalb der Förderkette angeordnet, so dass die Kettenglieder durch eine magnetische Anziehungskraft plan gehalten werden.

Gemäß einer weiteren vorteilhaften Ausführungsform weist die seitliche Führung eine Teilungsabführeinheit, bevorzugt eine Führungsschnecke, zum teilgenauen Abführen von Behältern von dem Teilkreis auf. Hierdurch kann erzielt werden, dass die Behälter von der Behälterbehandlungsvorrichtung an die Vorrichtung zum Abführen von Behältern teilgenau übergeben werden. Mit anderen Worten kann so erzielt werden, dass die Taktung, mit welcher die Vorrichtung die Behälter von der Behälterbehandlungsvorrichtung übernimmt, der Taktung der Behälterbehandlungsvorrichtung entspricht. Entsprechend können die Behälter von der Behälterbehandlungsvorrichtung übernommen werden, ohne dass die Behälter einen signifikanten Stoß erfahren.

Vorzugsweise weist die seitliche Führung bezogen auf die Transportrichtung und bezüglich des Teilkreises einen auf einer radial äußeren Seite angeordneten radial äußeren Führungsteil auf, und/oder weist die seitliche Führung bezogen auf die Transportrichtung und bezüglich des Teilkreises einen auf einer radial inneren Seite angeordneten radial inneren Führungsteil auf. Unter "radial äußere Seite" wird jene Seite bezogen auf die geführten Behälter verstanden, welche einen geführten Behälter an einer bezogen auf den Mittelpunkt des Teilkreises radial äußeren Seite des Behälters in Hinblick auf den Mittelpunkt, mithin einer dem Mittelpunkt abgewandten Seite des Behälters, führt. Entsprechend wird die "radial innere Seite" als jene Seite verstanden, auf welcher ein geführter Behälter an dessen den Mittelpunkt zugewandten Seite geführt wird. Anders ausgedrückt ist das radial äußere Führungsteil bezogen auf eine radiale Richtung ausgehend vom Mittelpunkt des Teilkreises weiter vom Mittelpunkt entfernt als dass radial innere Führungsteil.

Der radial äußere Führungsteil und der radial innere Führungsteil sind mithin bezogen auf einen durch die seitliche Führung geführten Behälter sich gegenüberliegend angeordnet, wobei der radial äußere Führungsteil den Behälter auf einer ersten Seite führt, und der radial innere Führungsteil den Behälter auf einer der ersten Seite gegenüberliegenden zweiten Seite führt. Mit anderen Worten stellen der radial äußere Führungsteil und der radial innere Führungsteil eine beidseitige Führung quer zur Transportrichtung des Behälters bereit.

Es hat sich als vorteilhaft herausgestellt, wenn der radial äußere Führungsteil die Teilungszuführeinheit aufweist, wobei bevorzugt der radial innere Teil eine Führungsschiene aufweist, welche den auf der Bodentransportvorrichtung transportieren Behälter quer zur Transportrichtung in einer Behälteraufnahme der Teilungszuführeinheit hält.

Es hat sich als besonders vorteilhaft herausgestellt, eine Vorrichtung bereitzustellen, welche sowohl geeignet, bevorzugt ausgebildet, ist zum Abführen eines Behälters von einer der Vorrichtung in Transportrichtung des Behälters gesehen vorgelagerten Behälterbehandlungsvorrichtung gemäß einem der vorbeschriebenen Ausführungsformen als auch geeignet, bevorzugt ausgebildet, zum Zuführen eines Behälters an eine der Vorrichtung in Transportrichtung des Behälters gesehen nachgelagerten Behälterbehandlungsvorrichtung gemäß einem der vorbeschriebenen Ausführungsformen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Draufsicht auf eine Behälterbehandlungsvorrichtung zum Behandeln eines Behälters;
- Figur 2: schematisch eine Draufsicht einer weiteren Behälterbehandlungsvorrichtung zum Behandeln eines Behälters;
- Figur 3: schematisch eine perspektivische Seitenansicht eines Details der Behälterbehandlungsvorrichtung aus Figur 2;
- Figur 4: schematisch eine Behälterbehandlungsvorrichtung gemäß einer weiteren Ausführungsform;
- Figur 5: schematisch eine Behälterbehandlungsvorrichtung gemäß einer weiteren Ausführungsform; und
- Figur 6: schematisch Getränkeabfüllanlage, umfassend eine erste Behälterbehandlungsvorrichtung entsprechend Figur 5 und eine zweite Behälterbehandlungsvorrichtung entsprechend Figur 1.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

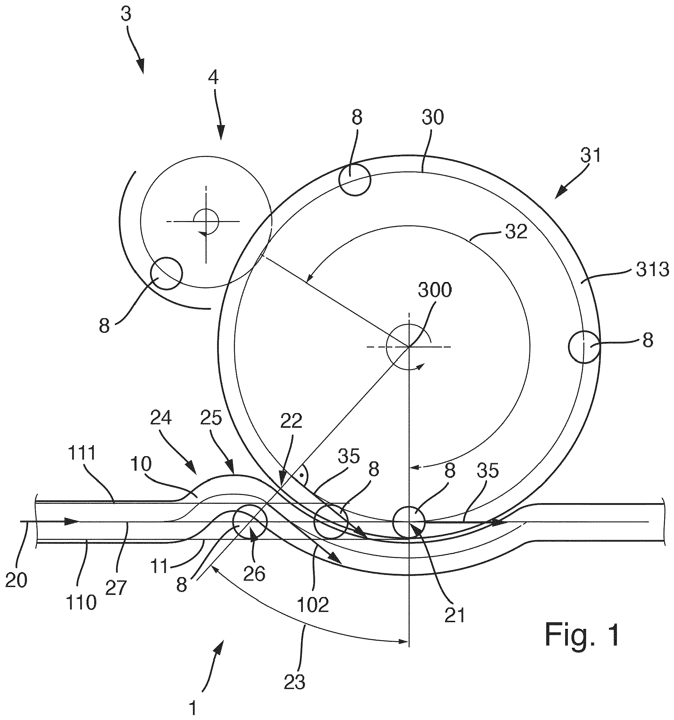

In Figur 1 ist schematisch eine Draufsicht auf eine Behälterbehandlungsvorrichtung 3 zum Behandeln eines Behälters 8, vorliegend ausgebildet zum Verschließen eines mit einem flüssigen Füllgut befüllten Behälters 8 in einer Getränkeabfüllanlage, gezeigt. Die Behälterbehandlungsvorrichtung 3 umfasst ein Transportkarussell 31 zum Transportieren von Behältern 8 auf einem Teilkreis 30 und eine Behandlungseinheit (nicht gezeigt), welche eine Vielzahl von starr an dem Transportkarussell 31 angeordneten Verschließorganen zum Verschließen eines durch das Transportkarussell 31 transportieren Behälters 8 aufweist.

Die Behälterbehandlungsvorrichtung 3 weist ferner eine Vorrichtung 1 zum Zuführen von Behältern 8 an das Transportkarussell 31 der Behälterbehandlungsvorrichtung 3 auf.

Die Vorrichtung 1 umfasst eine Bodentransportvorrichtung 10 zum linearen Transportieren der Behälter 8 an jeweils dessen Behälterboden in einer Transportrichtung 20, und eine seitliche Führung 11 zum tangentialen Zuführen der durch die Bodentransportvorrichtung 10 transportierten Behälter 8 in einem Übergabepunkt 21 an einen durch das Transportkarussell 31 vorgegebenen Teilkreis 30 der Behälterbehandlungsvorrichtung 3.

Der Teilkreis 30 ist hierbei auf den Mittelpunkt bzw. die Mittellängsachse der Behälter 8 bezogen. Mithin deutet der Teilkreis 30 die Bewegung des Mittelpunktes bzw. der Mittellängsachse eines durch das Transportkarussell 31 transportierten Behälters 8 an.

Die Bodentransportvorrichtung 10 weist in Transportrichtung 20 gesehen dem Übergabepunkt 21 vorgelagert zunächst aus einer linearen Zuführrichtung 27 eine Auslenkung 24 in Richtung des Mittelpunktes 300 des Teilkreises 30 und daran anschließend einen Krümmungswechsel 25 auf, derart, dass die Bodentransportvorrichtung 10 an einem Auftreffpunkt 22 tangential zum Teilkreis 30 orientiert ist.

Im Auftreffpunkt 22 weist die Bodentransportvorrichtung 10 einen weiteren Krümmungswechsel 26 auf, sodass die Bodentransportvorrichtung 10 dann wie oben beschrieben parallel zum Teilkreis 30 verläuft.

Mit anderen Worten ist die Bodentransportvorrichtung 10 in Transportrichtung 20 gesehen dem Übergabepunkt 21 vorgelagert S-Schlag-förmig ausgebildet, wobei sich der S-Schlag aus dem Übergabebereich 23 und dem durch die Auslenkung 24 gebildeten Bereich zusammensetzt.

Im sich zwischen dem Auftreffpunkt 22 und dem Übergabepunkt 21 erstreckenden Übergabeabschnitt 23 sind die Bewegungsrichtung der Bodentransportvorrichtung 10 und jene des Transportkarussell 31 aufgrund des vorbeschriebenen parallelen Verlaufs im Wesentlichen gleich orientiert. Für den Auftreffpunkt 22 sind die Bewegungsrichtung 102 der Bodentransportvorrichtung 10 und die Bewegungsrichtung 35 des Transportkarussell 31 im Teilkreis 30 angedeutet.

Ein zu überführender Behälter 8 wird im Übergabeabschnitt 23 sukzessive via der seitlichen Führung 11 von der Bodentransportvorrichtung 10 auf das Bodentransportkarussell 31 überführt. Aufgrund der im Wesentlichen parallelorientierten Bewegungsrichtungen 102, 35 erfährt der Behälter 8 an seinem Behälterboden im Übergabeabschnitt 23 keine signifikanten Stöße. Aufgrund des Fehlens bzw. der lediglich geringen auf den Behälterboden induzierten Stöße ist ein darauf zurückzuführendes Rütteln des Behälters 8 während der Übergabe im Vergleich zu herkömmlichen Vorrichtungen stark reduziert oder gar gänzlich egalisiert.

Die seitliche Führung 11 weist bezogen auf die Transportrichtung 20 und bezüglich des Teilkreises 30 einen auf einer radial äußeren Seite angeordneten radial äußeren Führungsteil 110 und einen auf einer radial inneren Seite angeordneten radial inneren Führungsteil 111 auf.

Der radial äußere Führungsteil 110 und der radial innere Führungsteil 111 sind mithin bezogen auf einen durch die seitliche Führung 11 geführten Behälter 8 sich gegenüberliegend angeordnet, wobei der radial äußere Führungsteil 110 den Behälter 8 auf einer ersten Seite des Behälters führt, und der radial innere Führungsteil 111 den Behälter 8 auf der der ersten Seite gegenüberliegenden zweiten Seite des Behälters führt. Mit anderen Worten stellen der radial äußere Führungsteil 110 und der radial innere Führungsteil 111 eine beidseitige Führung des Behälters 8 quer zur Transportrichtung 20 bereit.

Nachdem ein zu verschließender Behälter 8 am Übergabepunkt 21 an das Transportkarussell 31 übergeben wurde, transportiert dieses den Behälter 8 entlang eines Transportbereichs 32, in welchem die Behandlung, vorliegend das Verschließen des Behälters 8 stattfindet. Am Ende des Transportbereichs 32 wird der nun verschlossenen Behälter 8 an eine weitere Transportrichtung 4 der Getränkeabfüllanlage übergeben.

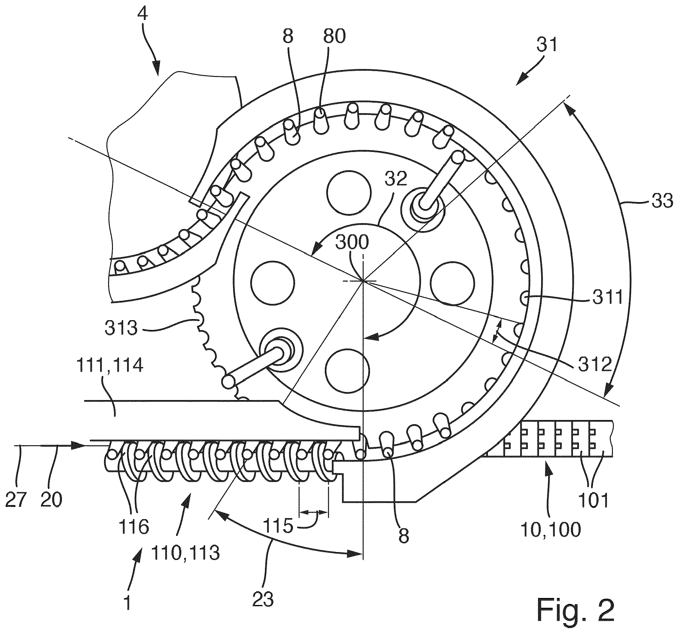

Figur 2 zeigt schematisch eine Draufsicht einer weiteren Behälterbehandlungsvorrichtung 3 zum Behandeln eines Behälters 8, vorliegend wiederum zum Verschließen eines mit einem flüssigen Füllgut befüllten Behälters 8. Die Behälterbehandlungsvorrichtung 3 entspricht im Wesentlichen jener aus Figur 1.

Mittels des Bezugszeichens 33 ist ein Behandlungsbereich der Behälterbehandlungsvorrichtung 3 angedeutet, in welchem das Verschließen der durch das Transportkarussell 31 transportierten Behälter 8 erfolgt, wobei ein Behälterverschluss 80 auf den Behälter 8 aufgebracht wird.

Das Transportkarussell 31 weist ein Bodentransportrad 313 auf, welches in Gravitationsrichtung gesehen auf Höhe der Bodentransportvorrichtung 10 angeordnet ist. Die durch die Vorrichtung 1 transportierten Behälter 8 werden im Übergabebereich 23 von der Bodentransportvorrichtung 10 sukzessive auf das Bodentransportrad 313 überführt.

Zudem weist das Transportkarussell 31 ein Teilungsrad 310 auf, welches eine Vielzahl von Behälteraufnahmen 311 umfasst. Die Behälteraufnahmen 311 sind an der radial äußeren Seite des Teilungsrades 310 in Umfangsrichtung mit gleichmäßigem Abstand voneinander angeordnet, wobei der Abstand zweier benachbarter Behälteraufnahmen 311 der Teilung 312 des Transportkarussells 31 entspricht.

Die Behälteraufnahmen 311 sind ausgebildet, um jeweils einen Behälter 8 zu positionieren. Um zu verhindern, dass ein in der Behälteraufnahme 311 aufgenommener Behälter 8 sich nach radial außen bewegt, ist entlang des Transportbereichs 32 eine radiale Außenführung 34 vorgesehen, welche den in der Behälteraufnahme 311 aufgenommene Behälter 8 in der Behälteraufnahme 311 hält.

Die Behälterbehandlungsvorrichtung 3 weist ferner wie oben beschrieben die Vielzahl von Verschließorganen (nicht gezeigt) auf, wobei jeder Behälteraufnahme 311 ein Verschließorgan zugeordnet ist, welches in Gravitationsrichtung gesehen oberhalb der jeweiligen Behälteraufnahme 311 angeordnet ist. Zum Verschließen eines in einer Behälteraufnahme 311 positionierten Behälters 8 ist das dieser Behälteraufnahme 311 zugeordnete Verschließorgan in an sich bekannter Weise auf das Bodentransportrad 313 abzusenken.

Die Bodentransportvorrichtung 10 gemäß dieser Ausführungsform weist eine im Wesentlichen horizontal angeordnete Förderkette 100 auf, welche durch eine Vielzahl von Kettenglieder 101 ausgebildet ist.

Die seitliche Führung 11 weist eine Teilungszuführeinheit 112 auf, welche vorliegend in Form einer Führungsschnecke 113 ausgebildet ist. Die Führungsschnecke 113 bildet den radial äußeren Führungsteil 110 aus. Sie weist eine durch Steigung, Gewindeflanke und Gewindegang der Schnecke geformte Teilung 115 auf, welche im Wesentlichen der Teilung 312 des Transportkarussells 31 entspricht, sodass die Behälter 8 von der Vorrichtung 1 teilungsgenau an das Transportkarussell 31 übergeben werden können. Mit anderen Worten kann so erzielt werden, dass die Taktung, mit welcher die Vorrichtung 1 die Behälter 8 an das Transportkarussell 31 übergibt, der Taktung der Behälterbehandlungsvorrichtung 3 entspricht.

Der Gewindegang der Führungsschnecke 113 formt mithin eine Vielzahl von Behälteraufnahmen 116 aus, wobei durch eine Rotation der Führungsschnecke 113 die Behälteraufnahmen 116 sich in Transportrichtung 20 versetzen. Die Rotationsgeschwindigkeit der Führungsschnecke 113 ist dabei derart vorgegeben, dass ein sich daraus einstellender Vorschub der Behälteraufnahmen 116 in Transportrichtung 20 im Wesentlichen der Transportgeschwindigkeit der Behälter 8 auf der Bodentransportvorrichtung 10 entspricht.

Vorliegend ist die Rotationsgeschwindigkeit der Führungsschnecke 113 um ihre Längsachse derart vorgegeben, dass eine sich die daraus resultierende Vorschubgeschwindigkeit der Behälteraufnahmen 116 in Bewegungsrichtung geringfügig größer ist als die Geschwindigkeit der Förderkette 100. Dadurch legen sich die transportierten Behälter 8 jeweils an die in Bewegungsrichtung gesehen hintere Flanke der jeweiligen durch die Führungsschnecke ausgebildeten Behälteraufnahme 116, wodurch ein sich bei der Übergabe einstellendes Ruckeln der Behälter 8 zusätzlich verringert, da die Behälter schon fest an die Teilungszuführeinheit 112 angelegt sind und die Auswirkungen des sukzessiven Außer-Eingriff-Bringens der Bodentransportvorrichtung 10 im Übergabebereich lediglich einen verminderten Einfluss auf die Bewegung der Behälter 8 haben.

Der radial innere Führungsteil 111 weist eine Führungsschiene 114 auf, welche die auf der Bodentransportvorrichtung 10 transportieren Behälter 8 quer zur Transportrichtung 20 in den Behälteraufnahmen 116 der Teilungszuführeinheit 110 hält.

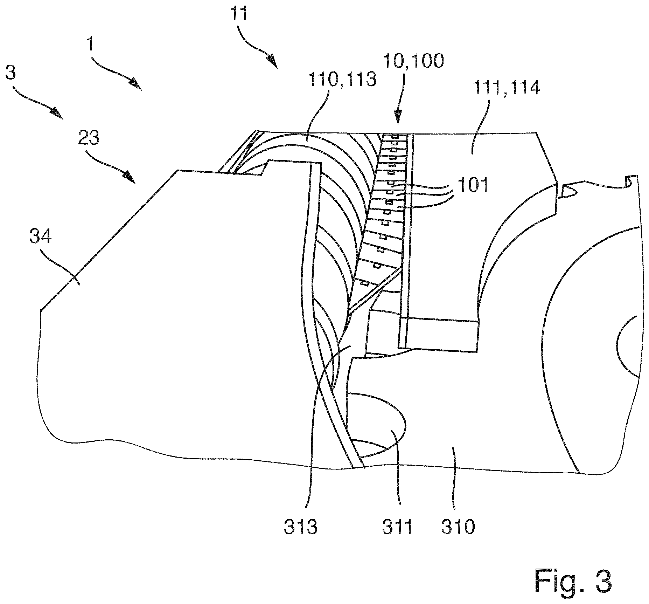

Figur 3 ist schematisch eine perspektivische Seitenansicht eines Details der Behälterbehandlungsvorrichtung 3 aus Figur 2 zu entnehmen, in welcher der S-Schlag der Bodentransportvorrichtung 10 zu erkennen ist.

Die Kettenglieder 101 der Förderkette 100 sind in einem vorgegebenen Winkelbereich in einer horizontalen Ebene gesehen relativ zueinander verschwenkbar. Hierdurch kann die Bodentransportvorrichtung 10 im Übergabebereich 23 besonders nahe an das Bodentransportkarussell 313 angeordnet werden, wobei die Förderkette 100 und das Bodentransportkarussell 313 sich im Übergabebereich 23 optional seitlich kontaktieren.

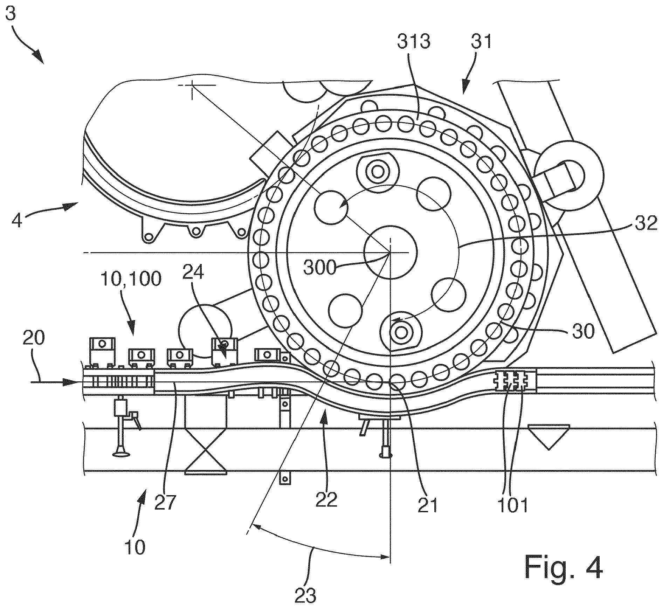

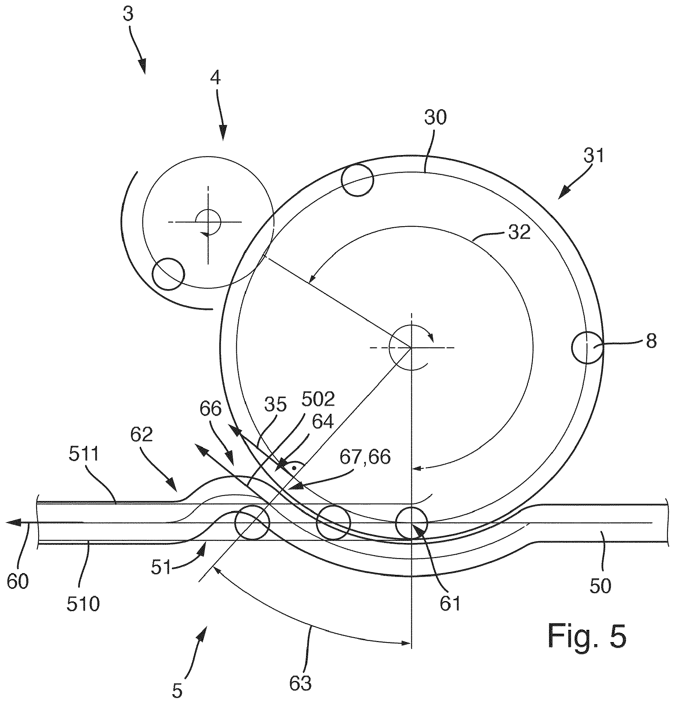

Figur 4 zeigt schematisch eine weitere Behälterbehandlungsvorrichtung 3, welche im Wesentlichen jener aus Figur 2 entspricht. Aus Veranschaulichungsgründen ist die seitliche Führung in dieser Figur nicht zeigt. Ferner sind auch das Teilungsrad und die radiale Außenführung nicht gezeigt. Figur 5 zeigt schematisch eine Behälterbehandlungsvorrichtung 3 gemäß einer weiteren Ausführungsform, welche dazu eingerichtet ist, Behälter mit einem Füllgut zu befüllen. Mit anderen Worten ist die Behälterbehandlungsvorrichtung 3 als Füllvorrichtung ausgebildet.

Analog zu den vorbeschriebenen Ausführungsformen weist die Behälterbehandlungsvorrichtung 3 aus Figur 5 ein Transportkarussell 31 auf, mittels welchem auf einem Teilkreis 30 entlang eines Transportbereichs 32 Behälter 8 transportiert werden können. Während des Transports im Transportbereich 32 werden die Behälter 8 in an sich bekannter Weise befüllt. Der Transportbereich 32 erstreckt sich von einer Transportvorrichtung 4, von welcher zu befüllende Behälter 8 an das Transportkarussell 31 übergeben werden, bis zu einem Übernahmepunkt 61, an welchem die dann gefüllten Behälter 8 vom Transportkarussell 31 an eine Vorrichtung 5 zum Abführen von Behältern 8 übergeben werden.

Die Vorrichtung 5 umfasst eine Bodentransportvorrichtung 50 zum linearen Transportieren der Behälter 8 an deren Behälterboden in einer Transportrichtung 50 und eine seitliche Führung 51 zum tangentialen Abführen der durch die Bodentransportvorrichtung 50 zu transportierenden Behälter 8 im Übernahmepunkt 61 von dem Teilkreis 30 der Behälterbehandlungsvorrichtung 3. Die Bodentransportvorrichtung 50 weist in Transportrichtung 60 gesehen dem Übernahmepunkt 61 der seitlichen Führung 51 nachgelagert einen sich bis zu einem Abzweigpunkt 67 erstreckenden Übernahmeabschnitt 63 auf, in welchem die Bodentransportvorrichtung 50 im Wesentlichen parallel zum Teilkreis 30 verläuft.

Dadurch kann erzielt werden, dass beim Überführen eines Behälters 8 von dem in Transportrichtung 60 des Behälters 8 gesehen stromaufwärts angeordneten Transportkarussell 31 an die Bodentransportvorrichtung 50 ein durch das Überführen auf den Behälter 8 induzierter Stoß vermindert oder gar gänzlich vermieden werden kann.

Im Übernahmeabschnitt sind analog wie zu Figur 1 beschrieben die Bewegungsrichtung 502 der Bodentransportvorrichtung 50 und die Bewegungsrichtung 35 des Transportkarussells 31 im Wesentlichen gleich orientiert. Wird ein Behälter 8 im Übergabeabschnitt 63 sukzessive via der seitlichen Führung 51 von dem Transportkarussell 31 auf die Bodentransportvorrichtung 50 überführt, so erfährt der Behälter 8 an seinem Behälterboden aufgrund der gleichen Orientierung der Bewegungsrichtungen 502, 35 keine signifikanten Stöße.

Die Bodentransportvorrichtung 50 weist in Transportrichtung 60 gesehen dem Übernahmeabschnitt 63 nachgelagert zunächst eine Auslenkung 64 nach radial außen bezogen auf den Mittelpunkt 300 des Teilkreises 30 auf, und weist anschließend einen Krümmungswechsel 66 auf, derart, dass die Bodentransportvorrichtung 50 an einem Zusammenführungspunkt 62 parallel zur seitlichen Führung 51 orientiert ist. Mit anderen Worten ist die Bodentransportvorrichtung 50 in Transportrichtung 60 gesehen dem Übernahmepunkt 61 nachgelagert S-Schlag-förmig ausgebildet.

Die seitliche Führung 51 weist bezogen auf die Transportrichtung 60 und bezüglich des Teilkreises 30 einen auf einer radial äußeren Seite angeordneten radial äußeren Führungsteil 510 und einen auf einer radial inneren Seite angeordneten radial inneren Führungsteil 511 auf, entsprechend der Führungsteil 110, 111 der Vorrichtung aus Figur 1, wobei hier optional beide Führungsteile 510, 511 eine Führungsschiene aufweisen. Der radial äußere Führungsteil 510 und der radial innere Führungsteil 511 Stellen eine beidseitige Führung der Behälter 8 quer zur Transportrichtung 60 bereit.

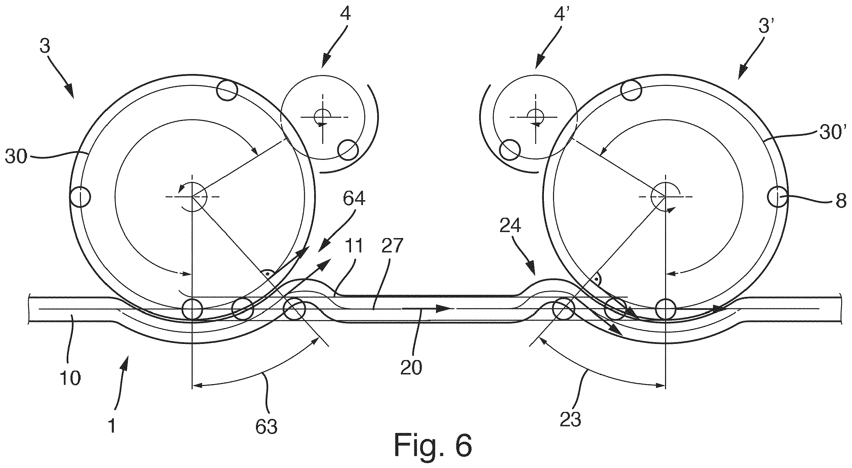

Figur 6 zeigt schematisch eine Getränkeabfüllanlage, umfassend eine erste Behälterbehandlungsvorrichtung 3 in Form einer Füllvorrichtung entsprechend der Behälterverschließvorrichtung 3 aus Figur 5, und eine zweite Behälterbehandlungsvorrichtung 3' in Form einer Behälterverschließvorrichtung 3' entsprechend der Behälterverschließvorrichtung 3 aus Figur 1.

Zwischen den Behälterverschließvorrichtungen 3, 3' ist eine Vorrichtung 1 zum Transportieren von Behältern 8 angeordnet, welche einen Abschnitt aufweist, welcher zum Abführen von in der Behälterbehandlungsvorrichtung 3 befüllten Behälter 8 ausgebildet ist, und einen Abschnitt aufweist, welcher zum Zuführen von befüllten Behältern an die Behälterbehandlungsvorrichtung 3' zum Verschließen der Behälter 8 mit einem Behälterverschluss 80 ausgebildet ist.

Entsprechend entspricht der Abschnitt zum Zuführen der Vorrichtung 1 gemäß Figur 1, und entspricht der Abschnitt zum Abführen der Vorrichtung 5 aus Figur 5, wobei die Bodentransportvorrichtung 1 im Abschnitt zum Abführen entsprechend der Ausführung in Figur 5 einen Übernahmebereich 63 und eine sich daran in Transportrichtung 20 anschließende Auslenkung 64 aufweist, und im Abschnitt zum Abführen entsprechend der Ausführung in Figur 1 eine Auslenkung 24 und einen sich daran anschließenden Übergabebereich 23 aufweist.

### Bezugszeichenliste

- 1: Vorrichtung
- 10: Bodentransportvorrichtung
- 100: Förderkette
- 101: Kettenglied
- 102: Bewegungsrichtung
- 11: Seitliche Führung
- 110: Radial äußeres Führungsteil
- 111: Radial inneres Führungsteil
- 112: Teilungszuführeinheit
- 113: Führungsschnecke
- 114: Führungsschiene
- 115: Teilung
- 116: Behälteraufnahme
- 20: Transportrichtung
- 21: Übergabepunkt
- 22: Auftreffpunkt
- 23: Übergabebereich
- 24: Auslenkung
- 25: Krümmungswechsel
- 26: Krümmungswechsel
- 27: lineare Zuführrichtung
- 3: Behälterbehandlungsvorrichtung
- 30: Teilkreis
- 300: Mittelpunkt
- 31: Transportkarussell
- 310: Teilungsrad
- 311: Behälteraufnahme
- 312: Teilung
- 313: Bodentransportrad
- 32: Transportbereich
- 33: Behandlungsbereich
- 34: radiale Außenführung
- 35: Bewegungsrichtung
- 5: Vorrichtung
- 50: Bodentransportvorrichtung
- 500: Förderkette
- 501: Kettenglied
- 502: Bewegungsrichtung
- 51: Seitliche Führung
- 510: Radial äußeres Führungsteil
- 511: Radial inneres Führungsteil
- 60: Transportrichtung
- 61: Übernahmepunkt
- 62: Zusammenführungspunkt
- 63: Übernahmebereich
- 64: Auslenkung
- 65: Krümmungswechsel
- 66: Krümmungswechsel
- 67: Abzweigpunkt
- 8: Behälter
- 80: Behälterverschluss

## Patentansprüche

1. Behälterbehandlungsvorrichtung (3) zum Behandeln eines Behälters (8), bevorzugt zum Verschließen eines mit einem Füllgut befüllten Behälters (8) und/oder zum Befüllen eines Behälters (8) mit einem Füllgut in einer Getränkeabfüllanlage, wobei die Behälterbehandlungsvorrichtung (3) aufweist:
ein Transportkarussell (31) zum Transportieren von Behältern (8) auf einem Teilkreis (30) und eine Behandlungseinheit zum Behandeln der durch das Transportkarussell (31) transportieren Behälter (8); und
eine Vorrichtung (1) zum Zuführen eines Behälters (8), umfassend eine Bodentransportvorrichtung (10) zum linearen Transportieren des Behälters (8) an dessen Behälterboden in einer Transportrichtung (20) und eine seitliche Führung (11) zum tangentialen Zuführen des durch die Bodentransportvorrichtung (10) transportierten Behälters (8) in einem Übergabepunkt (21) an den Teilkreis (30) der Behälterbehandlungsvorrichtung (3);
**dadurch gekennzeichnet, dass**
die Bodentransportvorrichtung (10) in Transportrichtung (20) gesehen dem Übergabepunkt (21) der seitlichen Führung (11) vorgelagert einen sich bis zum Übergabepunkt (21) erstreckenden Übergabeabschnitt (23) aufweist, in welchem die Bodentransportvorrichtung (10) im Wesentlichen parallel zum Teilkreis (30) verläuft.

2. Behälterbehandlungsvorrichtung (3) gemäß Anspruch 1, **dadurch gekennzeichnet, dass** die Bodentransportvorrichtung (10) in Transportrichtung (20) gesehen dem Übergabepunkt (21) vorgelagert zunächst aus einer linearen Zuführrichtung (27) eine Auslenkung (24) in Richtung des Mittelpunktes (300) des Teilkreises (30) aufweist, und die Bodentransportvorrichtung (10) anschließend einen Krümmungswechsel (25) aufweist, derart, dass die Bodentransportvorrichtung (10) an einem Auftreffpunkt (22) tangential zum Teilkreis (30) orientiert ist, wobei bevorzugt die Bodentransportvorrichtung (10) im Auftreffpunkt (22) einen weiteren Krümmungswechsel (26) aufweist.

3. Behälterbehandlungsvorrichtung (3) gemäß einem der vorstehenden Ansprüche,
**dadurch gekennzeichnet, dass** die Bodentransportvorrichtung (10) ein im Wesentlichen horizontal angeordnetes Förderband und/oder eine im Wesentlichen horizontal angeordnete Förderkette (100) aufweist.

4. Behälterbehandlungsvorrichtung (3) gemäß einem der vorstehenden Ansprüche,
**dadurch gekennzeichnet, dass** die seitliche Führung (11) eine Teilungszuführeinheit (112), bevorzugt eine Führungsschnecke (113), zum teilgenauen Zuführen von Behältern (8) an den Teilkreis (30) aufweist.

5. Behälterbehandlungsvorrichtung (3) gemäß einem der vorstehenden Ansprüche,
**dadurch gekennzeichnet, dass** die seitliche Führung (11) bezogen auf die Transportrichtung (20) und bezüglich des Teilkreises (30) einen auf einer radial äußeren Seite angeordneten radial äußeren Führungsteil (110) aufweist, und/oder die seitliche Führung (11) bezogen auf die Transportrichtung (20) und bezüglich des Teilkreises (30) einen auf einer radial inneren Seite angeordneten radial inneren Führungsteil (111) aufweist.

6. Behälterbehandlungsvorrichtung (3) gemäß dem vorstehenden Anspruch, **dadurch gekennzeichnet, dass** der radial äußere Führungsteil (110) die Teilungszuführeinheit (112) aufweist, wobei bevorzugt der radial innere Teil (111) eine Führungsschiene (114) aufweist, welche den auf der Bodentransportvorrichtung (10) transportieren Behälter (8) quer zur Transportrichtung (20) in einer Behälteraufnahme (116) der Teilungszuführeinheit (112) hält.

7. Behälterbehandlungsvorrichtung (3) zum Behandeln eines Behälters (8), bevorzugt zum Verschließen eines mit einem Füllgut befüllten Behälters (8) und/oder zum Befüllen eines Behälters (8) mit einem Füllgut in einer Getränkeabfüllanlage, wobei die Behälterbehandlungsvorrichtung (3) aufweist:
ein Transportkarussell (31) zum Transportieren von Behältern (8) auf einem Teilkreis (30) und eine Behandlungseinheit zum Behandeln der durch das Transportkarussell (31) transportieren Behälter (8); und
eine Vorrichtung (5) zum Abführen eines Behälters (8), umfassend eine Bodentransportvorrichtung (50) zum linearen Transportieren des Behälters (8) an dessen Behälterboden in einer Transportrichtung (60) und eine seitliche Führung (51) zum tangentialen Abführen des durch die Bodentransportvorrichtung (50) zu transportierenden Behälters (8) in einem Übernahmepunkt (61) von dem Teilkreis (30) der Behälterbehandlungsvorrichtung (3);
**dadurch gekennzeichnet, dass**
die Bodentransportvorrichtung (50) in Transportrichtung (60) gesehen dem Übernahmepunkt (61) der seitlichen Führung (51) nachgelagert einen sich bis zu einem Abzweigpunkt (67) erstreckenden Übernahmeabschnitt (63) aufweist, in welchem die Bodentransportvorrichtung (50) im Wesentlichen parallel zum Teilkreis (30) verläuft.

8. Behälterbehandlungsvorrichtung (3) gemäß Anspruch 7, **dadurch gekennzeichnet, dass** die Bodentransportvorrichtung (50) in Transportrichtung (60) gesehen dem Übernahmeabschnitt (63) nachgelagert zunächst eine Auslenkung (64) nach radial außen bezogen auf den Mittelpunkt (300) des Teilkreises (30) aufweist, und die Bodentransportvorrichtung (50) anschließend einen Krümmungswechsel (65) aufweist, derart, dass die Bodentransportvorrichtung (50) an einem Zusammenführungspunkt (62) parallel zur seitlichen Führung ist.

9. Behälterbehandlungsvorrichtung (3) gemäß einem der Ansprüche 7 oder 8, **dadurch gekennzeichnet, dass** die Bodentransportvorrichtung (50) ein im Wesentlichen horizontal angeordnetes Förderband und/oder eine im Wesentlichen horizontal angeordnete Förderkette aufweist.

10. Behälterbehandlungsvorrichtung (3) gemäß einem der Ansprüche 7 bis 9, **dadurch gekennzeichnet, dass** die seitliche Führung (51) eine Teilungsabführeinheit, bevorzugt eine Führungsschnecke, zum teilgenauen Abführen von Behältern (8) von dem Teilkreis (30) aufweist.

11. Behälterbehandlungsvorrichtung (3) gemäß einem der Ansprüche 7 bis 10, **dadurch gekennzeichnet, dass** die seitliche Führung (51) bezogen auf die Transportrichtung (60) und bezüglich des Teilkreises (30) einen auf einer radial äußeren Seite angeordneten radial äußeren Führungsteil (510) aufweist, und/oder die seitliche Führung (51) bezogen auf die Transportrichtung (60) und bezüglich des Teilkreises (30) einen auf einer radial inneren Seite angeordneten radial inneren Führungsteil (511) aufweist.

12. Behälterbehandlungsvorrichtung (3) gemäß dem vorstehenden Anspruch, **dadurch gekennzeichnet, dass** der radial äußere Führungsteil (510) die Teilungszuführeinheit aufweist, wobei bevorzugt der radial innere Führungsteil (511) eine Führungsschiene aufweist, welche den auf der Bodentransportvorrichtung (50) transportieren Behälter (8) quer zur Transportrichtung (60) in einer Behälteraufnahme der Teilungszuführeinheit hält.

## Claims

1. Container handling device (3) for handling a container (8), preferably for closing a container (8) filled with a filling product and/or for filling a container (8) with a filling product in a beverage filling plant, wherein the container handling device (3) comprises:
a transport carousel (31) for transporting containers (8) on a pitch circle (30) and a handling unit for handling the containers (8) transported by the transport carousel (31); and
a device (1) for feeding a container (8), comprising a base transport device (10) for a linear transport of the container (8) at its container base in a transport direction (20) and a lateral guide (11) for tangentially feeding the container (8) transported by the base transport device (10) at a transfer point (21) to the pitch circle (30) of the container handling device (3);
**characterised in that**
the base transport device (10), as viewed in transport direction (20), has a transfer section (23) upstream of the transfer point (21) of the lateral guide (11) extending up to the transfer point (21), in which transfer section the base transport device (10) extends essentially parallel to the pitch circle (30).

2. Container handling device (3) according to claim 1, **characterised in that** the base transport device (10), as viewed in transport direction (20), initially has a deflection (24) from a linear feed direction (27) in the direction of the center point (300) of the pitch circle (30) upstream of the transfer point (21), and the base transport device (10) then has a change of curvature (25) such that the base transport device (10) is oriented tangentially to the pitch circle (30) at a point of contact (22), wherein preferably the base transport device (10) has a further change of curvature (26) at the point of contact (22).

3. Container handling device (3) according to any one of the preceding claims, **characterised in that** the base transport device (10) has an essentially horizontally arranged conveyor belt and/or an essentially horizontally arranged conveyor chain (100).

4. Container handling device (3) according to any one of the preceding claims, **characterised in that** the lateral guide (11) has a dividing feed unit (112), preferably a guide screw (113), for the partially accurate feeding of containers (8) to the pitch circle (30).

5. Container handling device (3) according to any one of the preceding claims, **characterised in that** the lateral guide (11) has a radially outer guide part (110) arranged on a radially outer side with respect to the transport direction (20) and with respect to the pitch circle (30), and/or the lateral guide (11) has a radially inner guide part (111) arranged on a radially inner side with respect to the transport direction (20) and with respect to the pitch circle (30).

6. Container handling device (3) according to the preceding claim, **characterised in that** the radially outer guide part (110) comprises the dividing feed unit (112), wherein preferably the radial inner part (111) has a guide rail (114), which holds the container (8) transported on the base transport device (10) transversely to the transport direction (20) in a container receptacle (116) of the dividing feed unit (112).

7. Container handling device (3) for handling a container (8), preferably for closing a container (8) filled with a filling product and/or for filling a container (8) with a filling product in a beverage filling plant, wherein the container handling device (3) comprises:
a transport carousel (31) for transporting containers (8) on a pitch circle (30) and a handling unit for handling the containers (8) transported by the transport carousel (31); and
a device (5) for discharging a container (8), comprising a base transport device (50) for a linear transport of the container (8) at its container base in a transport direction (60) and a lateral guide (51) for tangentially discharging the container (8) to be transported by the base transport device (50) at a take-over point (61) of the pitch circle (30) of the container handling device (3);
**characterised in that**
the base transport device (50), as viewed in transport direction (60), has a take-over section (63), downstream of the take-over point (61) of the lateral guide (51), extending up to a branch point (67), in which transfer section the base transport device (50) extends essentially parallel to the pitch circle (30).

8. Container handling device (3) according to claim 7, **characterised in that** the base transport device (50), as viewed in transport direction (60), downstream of the take-over section (63), initially has a deflection (64) radially outwards relative to the center point (300) of the pitch circle (30), and the base transport device (50) then has a change of curvature (65) such that the base transport device (50) is parallel to the lateral guide at a merging point (62).

9. Container handling device (3) according to any one of claims 7 or 8, **characterised in that** the base transport device (50) has an essentially horizontally arranged conveyor belt and/or an essentially horizontally arranged conveyor chain.

10. Container handling device (3) according to any one of claims 7 to 9, **characterised in that** the lateral guide (51) has a dividing discharge unit, preferably a guide screw, for the partially accurate discharge of containers (8) from the pitch circle (30).

11. Container handling device (3) according to any one of claims 7 to 10, **characterised in that** the lateral guide (51) has a radially outer guide part (510) arranged on a radially outer side with respect to the transport direction (60) and with respect to the pitch circle (30), and/or the lateral guide (51) has a radially inner guide part (511) arranged on a radially inner side with respect to the transport direction (60) and with respect to the pitch circle (30).

12. Container handling device (3) according to the preceding claim, **characterised in that** the radially outer guide part (510) comprises the dividing feed unit, wherein preferably the radially inner guide part (511) comprises a guide rail, which holds the container (8) transported on the base transport device (50) transversely to the transport direction (60) in a container receptacle of the dividing feed unit.

## Revendications

1. Dispositif de traitement de récipient (3) pour le traitement d'un récipient (8), de préférence pour la fermeture d'un récipient (8) rempli avec un produit de remplissage et/ou pour le remplissage d'un récipient (8) avec un produit de remplissage dans une installation de remplissage de boissons, dans lequel le dispositif de traitement de récipient (3) présente :
un carrousel de transport (31) pour le transport de récipients (8) sur un cercle partiel (30) et une unité de traitement pour le traitement des récipients (8) transportés par le carrousel de transport (31) ; et
un dispositif (1) pour l'alimentation d'un récipient (8), comprenant un dispositif de transport de fond (10) pour le transport linéaire du récipient (8) au niveau de son fond de récipient dans un sens de transport (20) et un guidage latéral (11) pour l'alimentation tangentielle du récipient (8) transporté par le dispositif de transport de fond (10) dans un point de transfert (21) au niveau du cercle partiel (30) du dispositif de traitement de récipient (3) ;
**caractérisé en ce que**
le dispositif de transport de fond (10) présente, vu dans le sens de transport (20), en amont du point de transfert (21) du guidage latéral (11), une section de transfert (23) s'étendant jusqu'au point de transfert (21) dans laquelle le dispositif de transport de fond (10) s'étend sensiblement parallèlement au cercle partiel (30).

2. Dispositif de traitement de récipient (3) selon la revendication 1, **caractérisé en ce que** le dispositif de transport de fond (10) présente, vu dans le sens de transport (20), en amont du point de transfert (21), tout d'abord une déviation (24) à partir d'un sens d'alimentation linéaire (27) en direction du point central (300) du cercle partiel (30), et le dispositif de transport de fond (10) présente ensuite un changement de courbure (25) de telle manière que le dispositif de transport de fond (10) soit orienté au niveau d'un point d'impact (22) tangentiellement par rapport au cercle partiel (30), dans lequel le dispositif de transport de fond (10) présente de préférence un autre changement de courbure (26) dans le point d'impact (22).

3. Dispositif de traitement de récipient (3) selon l'une quelconque des revendications précédentes, **caractérisé en ce que** le dispositif de transport de fond (10) présente une bande de transport agencée sensiblement horizontalement et/ou une chaîne de transport (100) agencée sensiblement horizontalement.

4. Dispositif de traitement de récipient (3) selon l'une quelconque des revendications précédentes **caractérisé en ce que** le guidage latéral (11) présente une unité d'alimentation séparante (112), de préférence une vis de guidage (113), pour l'alimentation partiellement précise de récipients (8) au niveau du cercle partiel (30).

5. Dispositif de traitement de récipient (3) selon l'une quelconque des revendications précédentes, **caractérisé en ce que** le guidage latéral (11) présente, par rapport au sens de transport (20) et par rapport au cercle partiel (30), une partie de guidage (110) radialement extérieure agencée sur un côté radialement extérieur, et/ou le guidage latéral (11) présente par rapport au sens de transport (20) et par rapport au cercle partiel (30) une partie de guidage (111) radialement intérieure agencée sur un côté radialement intérieur.

6. Dispositif de traitement de récipient (3) selon la revendication précédente, **caractérisé en ce que** la partie de guidage (110) radialement extérieure présente l'unité d'alimentation séparante (112), dans lequel de préférence la partie radialement intérieure (111) présente un rail de guidage (114) qui maintient le récipient (8) transporté sur le dispositif de transport de fond (10) transversalement au sens de transport (20) dans un logement de récipient (116) de l'unité d'alimentation séparante (112).

7. Dispositif de traitement de récipient (3) pour le traitement d'un récipient (8), de préférence pour la fermeture d'un récipient (8) rempli avec un produit de remplissage et/ou pour le remplissage d'un récipient (8) avec un produit de remplissage dans une installation de remplissage de boissons, dans lequel le dispositif de traitement de récipient (3) présente :
un carrousel de transport (31) pour le transport de récipients (8) sur un cercle partiel (30) et une unité de traitement pour le traitement des récipients (8) transportés par le carrousel de transport (31) ; et
un dispositif (5) pour l'évacuation d'un récipient (8), comprenant un dispositif de transport de fond (50) pour le transport linéaire du récipient (8) au niveau de son fond de récipient dans un sens de transport (60) et un guidage latéral (51) pour l'évacuation tangentielle du récipient (8) à transporter par le dispositif de transport de fond (50) dans un point de prise en charge (61) du cercle partiel (30) du dispositif de traitement de récipient (3) ;
**caractérisé en ce que**
le dispositif de transport de fond (50) présente, vu dans le sens de transport (60), en aval du point de prise en charge (61) du guidage latéral (51), une section de prise en charge (63) s'étendant jusqu'à un point de branchement (67) dans laquelle le dispositif de transport de fond (50) s'étend sensiblement parallèlement au cercle partiel (30).

8. Dispositif de traitement de récipient (3) selon la revendication 7, **caractérisé en ce que** le dispositif de transport de fond (50) présente, vu dans le sens de transport (60), en aval de la section de prise en charge (63), tout d'abord une déviation (64) radialement vers l'extérieur par rapport au point central (300) du cercle partiel (30), et le dispositif de transport de fond (50) présente ensuite un changement de courbure (65) de telle manière que le dispositif de transport de fond (50) soit parallèle au guidage latéral au niveau d'un point de jonction (62).

9. Dispositif de traitement de récipient (3) selon l'une quelconque des revendications 7 ou 8, **caractérisé en ce que** le dispositif de transport de fond (50) présente une bande de transport agencée sensiblement horizontalement et/ou une chaîne de transport agencée sensiblement horizontalement.

10. Dispositif de traitement de récipient (3) selon l'une quelconque des revendications 7 à 9, **caractérisé en ce que** le guidage latéral (51) présente une unité d'alimentation séparante, de préférence une vis de guidage, pour l'évacuation partiellement précise de récipients (8) du cercle partiel (30).

11. Dispositif de traitement de récipient (3) selon l'une quelconque des revendications 7 à 10, **caractérisé en ce que** le guidage latéral (51) présente par rapport au sens de transport (60) et par rapport au cercle partiel (30) une partie de guidage (510) radialement extérieure agencée sur un côté radialement extérieur, et/ou le guidage latéral (51) présente par rapport au sens de transport (60) et par rapport au cercle partiel (30) une partie de guidage (511) radialement intérieure agencée sur un côté radialement intérieur.

12. Dispositif de traitement de récipient (3) selon la revendication précédente, **caractérisé en ce que** la partie de guidage (510) radialement extérieure présente l'unité d'alimentation séparante, dans lequel de préférence la partie de guidage (511) radialement intérieure présente un rail de guidage qui maintient le récipient (8) transporté sur le dispositif de transport de fond (50) transversalement au sens de transport (60) dans un logement de récipient de l'unité d'alimentation et de séparation.
